Europäisches Patentamt

European Patent Office

Office européen des brevets

(11) Publication number: **0 241 250**
**A2**

## (12) EUROPEAN PATENT APPLICATION

(21) Application number: **87302966.4**

(22) Date of filing: **06.04.87**

(51) Int. Cl.⁴: **H 02 M 3/337**

(30) Priority: **08.04.86 DE 3611825**

(43) Date of publication of application:
**14.10.87 Bulletin 87/42**

(84) Designated Contracting States:
**DE ES FR GB IT SE**

(84) Designated Contracting States: **GB**

(71) Applicant: **TUCKER GMBH**
**Max-Eyth-Strasse1 Postfach 111329**
**D-6300 Giessen (DE)**

(84) Designated Contracting States: **DE**

(71) Applicant: **EMHART ENTERPRISES CORP**
**426 Colt Highway**
**Farmington Connecticut 06032 (US)**

(84) Designated Contracting States: **FR IT SE**

(71) Applicant: **SISTEMAS DE FIJACION TUCKER S.A.**
**Carretera Madrid-Barcelona Km 26,700, Alcala de Henares**
**Madrid (ES)**

(84) Designated Contracting States: **ES**

(72) Inventor: **Schmitt, Klaus Gisbert**
**Alicenstrasse 22**
**D-6300 Giessen (DE)**

**Schmidt, Wolfgang**
**Freiherr-vom-Stein-Strasse 20**
**D-6301 Reiskirchen (DE)**

(71) Applicant: **TUCKER FASTENERS LIMITED**
**Walsall Road**
**Birmingham B42 1BP (GB)**

(74) Representative: **Wetters, Basil David Peter et al**
**Emhart Patents Department Lyn House 39 The Parade**
**Oadby, Leicester LE2 5BB (GB)**

(54) Switching mode power supply.

(57) Switching mode power supply for supplying power to service equipment consuming heavy currents, in particular electrical welding equipment, in which the mains voltage is rectified by a mains rectifier, the direct voltage thus obtained is converted into a high-frequency square-wave voltage by means of semi-conductor switches controlled by high-frequency and the high-frequency square-wave voltage is transformed by a transformer and is rectified by an output rectifier, wherein the conductors of each electrical circuit carrying high-frequency power in the region between mains rectifier and output of the output rectifiers are formed as thin laminated metal plates having thin-film, preferably foil, insulation lying there-between.

FIG.1

**Description**

## SWITCHING MODE POWER SUPPLY

The present invention relates to a switching mode power supply unit for supplying power to service equipment consuming heavy currents, in particular electrical welding equipment, in which the mains voltage is rectified by a mains rectifier, the direct voltage thus obtained is converted into a high-frequency square-wave voltage by means of semi-conductor switches controlled by high-frequency and the high-frequency square-wave voltage is transformed by a transformer and is rectified by an output rectifier.

Electric welding equipment considered suitable in this connection is that which is operated by pulsed currents or by continuous currents. Electrical welding equipment operated by pulsed currents may be, for example, stud welding apparatus, by which studs are welded to a workpiece by an arc ignited over a short period of time, whereby the actual welding arc is ignited by a preceding, substantially weaker, pre-current arc. Electric welding equipment operated by continuous current include, for example, apparatus for carrying-out welding by permanent arc. The amperages required for this lie within a range of up to 1000 A.

Switching mode power supply units may also be used for example for the operation of other equipment having a power requirement of this order of magnitude.

Switching mode power supply units of this kind are operated in a known way by high-frequency, since this, in an operation at mains frequency, brings about a considerable reduction in size of the transformer, which then brings about the corresponding reduction of the alternating voltage, which then is rectified into a relatively low direct voltage. Additionally, control of semi-conductor switches at the high-frequency used in switching mode power supply units provides the possibility of extremely rapid control of the switching mode power supply unit. With a normal high-frequency timing frequency for the semi-conductor switches of the order of magnitude of 20 kHz and above, a cycle duration of 50 µs results, so that in rhythm of this short period the switching mode power supply unit is controllingly accessible. This is particularly of advantage when supplying power to equipment operated with particularly short impulses.

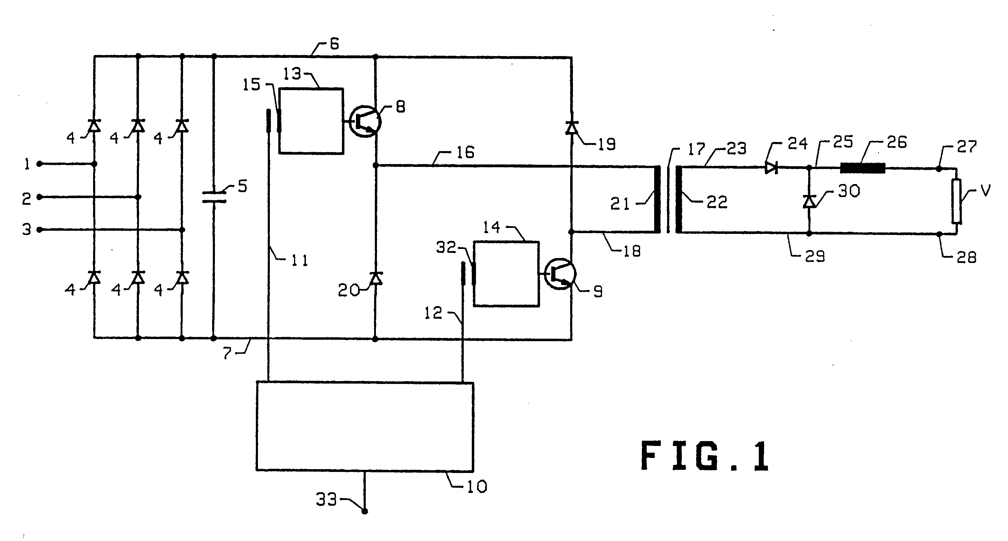

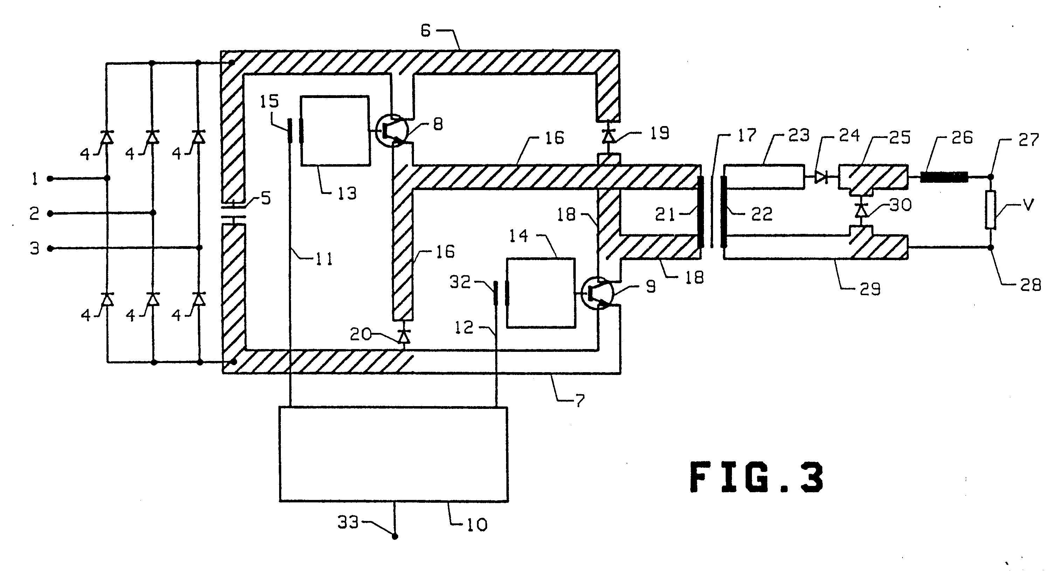

A switching mode power supply unit suitable for use in the present invention was described at the Ninth International PCI'84 Conference, held at Paris in October 1984 and reported in PCI OCTOBER 1984 PROCEEDINGS (Intertec Communications Inc. USA) in an article on pages 1 to 9. A circuit used within the scope of the present invention is depicted in Figure 3 of this article, and this circuit, together with a three-phase mains rectifier connected to the actual switching mode power supply unit is reproduced as Figure 1 of the drawings accompanying this specification. The circuit depicted in Figure 1 is supplied with three-phase mains voltage of common voltage rating (e.g. 380 V) across three terminals 1, 2 and 3 and is smoothed by capacitor 5. The voltage standing at capacitor 5 is supplied by wires 6 and 7 to semi-conductor switches 8 and 9, which are switched by cycle control unit 10. The cycle control unit 10 receives by terminal 33 a control voltage, being of no interest in this connection for starting and stopping the switching mode power supply unit and for controlling its pulse duty factor, by which the switching mode power supply unit is adjusted to the respective current requirement. The cycle control unit 10 delivers by wires 11 and 12 periodical time pulses of e.g. 20 kHz to driver circuits 13 and 14, by which semi-conductor switches 8 and 9 are respectively controlled in known manner. Driver circuits 13 and 14 are coupled through transmitters 15 and 32 to wires 11 and 12. The control of semi-conductor switches 8 and 9 takes place in such a manner that these are switched through simultaneously, so that a circuit is formed starting from capacitor 5 over wire 6, semi-conductor switch 8 and wire 16 to primary winding 21 of transformer 17, which is continued over wire 18 and semi-conductor switch 9 to wire 7, with which a through circuit is closed from capacitor 5 to transformer 17 over the two semi-conductor switches 8 and 9. During the following non-conducting phase of the semi-conductor switches 8 and 9 by the effect of the energy stored in transformer 17, the following circuit is formed:

From the primary winding of transformer 17 over wire 18 to diode 19 and over wire 6 to capacitor 5, at the other side over wire 16 to diode 20 and over wire 7 to capacitor 5, which again completes a closed circuit. During this flow of current through primary side 21 of transformer 17 during the conductive phase of semi-conductor switches 8 and 9, there is available, at its secondary side 22, a current over wire 23, rectifier 24, wire 25, storage choke 26 to terminal 27 of the power-consuming load V, from the latter over terminal 28 to wire 29 back to the secondary side 22 of transformer 17. During the non-conductive phase of semi-conductor switches 8 and 9, the storage choke 26 is discharging via a circuit over terminals 27 and 28 and wire 29 to inverse rectifier 30 and back over wire 25 to storage choke 26. Thus, a direct-current having an insignificant residual ripple flows over the load V connected to terminals 27 and 28. The rectifiers 24 and 30 constitute thereby the input rectifier.

In an output of 11 kW delivered by the known circuit there arise current changes of up to 200 A/µs in the region of the gate of the semi-conductor switches according to the findings stated in the article referred to above. These high, and above all quick, current changes on inductances formed by the wiring lead to high voltage peaks (according to the law $U = L \cdot \frac{dI}{dt}$ ). In order to avoid these voltage peaks on account of "parasitic inductances" (as they are called in the article), it is proposed in the article to keep the wires in the vicinity of the driver circuits as short as possible and to route them in such a manner that there are produced very small areas surrounded by the wiring loops.

It is an object of the present invention to design the known circuit in such a manner that substantially higher outputs can be delivered to a load at a high control velocity, for example, outputs in the order of magnitude of 60 kW.

According to the present invention we provide a switching mode power supply for supplying power to service equipment consuming heavy currents, in particular electrical welding equipment, in which the mains voltage is rectified by a mains rectifier, the direct voltage thus obtained is converted into a high-frequency square-wave voltage by means of semi-conductor switches controlled by high-frequency and the high-frequency square-wave voltage is transformed by a transformer and is rectified by an output rectifier, wherein the conductors of each electrical circuit carrying high-frequency power characterised in that in the region between mains rectifier and output of the output rectifiers are formed as thin laminated metal plates having thin-film, preferably foil, insulation lying there-between.

The invention is based, inter alia, on the appreciation that at the desired high control velocity of the switching mode power supply unit, parasitic inductances in wiring carrying the full capacity are particularly harmful, so that special measures were required in the corresponding area of the switching mode power supply unit. The present invention provides that conductors which carry high-frequency power are formed as thin metal plates, preferably of copper, by which they receive the required profile for high currents, for example in the order of magnitude of 1000 A, and these thin metal plates are collated in pairs in accordance with the circuit carrying the high-frequency power at the time, whereby the metal plate pairs, having thin-film insulation lying there-between, comprise a minimal area. The inductance of these circuits is thus reduced to a minimal value. When switching from one current to another (change-over from pre-current arc to welding arc) this makes possible high rates of current rises in the load supplied by the switching mode power supply unit, for example above 2000 A/μs. The use of thin metal plates makes possible in an especially advantageous way close combination of pairs of metal plates which produces a particularly high effectiveness of this design with regard to the ability to carry high currents at minimal inductance. The use of thin metal plates has also the additional advantageous effect that unavoidable waste heat can easily be dissipated on account of the ohmic resistance. Moreover, the metal plate pairs create capacities which short-circuit the voltage peaks of particularly high frequencies. So a further advantage, it was found that, due to the minimal area taken up by the pairs of metal plates, the need to use shorter wires, which is referred to particularly in the above-mentioned article, has become significantly less important. It has undoubtedly been proved in the service of the switching mode power supply unit constructed in accordance with the invention, that the areas surrounded by the pairs of metal plates are so small, that it is possible to bridge lengths of several decimeters with the metal plates without creating risky inductances.

The thin-film insulation between the metal plates may be provided in different ways, but is preferably foil insulation. It is however also possible to provide the insulation as a thin lacquer coating.

Appropriately, the pairs of conductors in the area between mains rectifier and transformer are accommodated within a sandwich structure, so that several metal plates are housed closely next to one another only separated from each other by the thin-film insulation; the circuits are each being formed in a different way within the area of the semi-conductor switches always enclose a minimal area and consequently cannot form an inductance of any importance. The same applies to the metal plates in the area between transformer and output rectifier.

A preferred embodiment of the present invention will now be described, by way of example with reference to Figures 2 to 5 of the accompanying drawings, in which:

Figure 2 shows the arrangement of conductors in the form of metal plates, using a circuitry-technical manner of representation, namely in the operating phase of the semi-conductor switches being conductive;

Figure 3 shows the same design as Figure 2 but in the operating phase of the semi-conductor switches being non-conductive;

Figure 4 reveals the portion of the switching mode power supply unit behind the mains rectifier (not shown) and the power consuming load by depicting the spatial coordination of the metal plates; and

Figure 5 shows a sandwich structure of two pairs of metal plates.

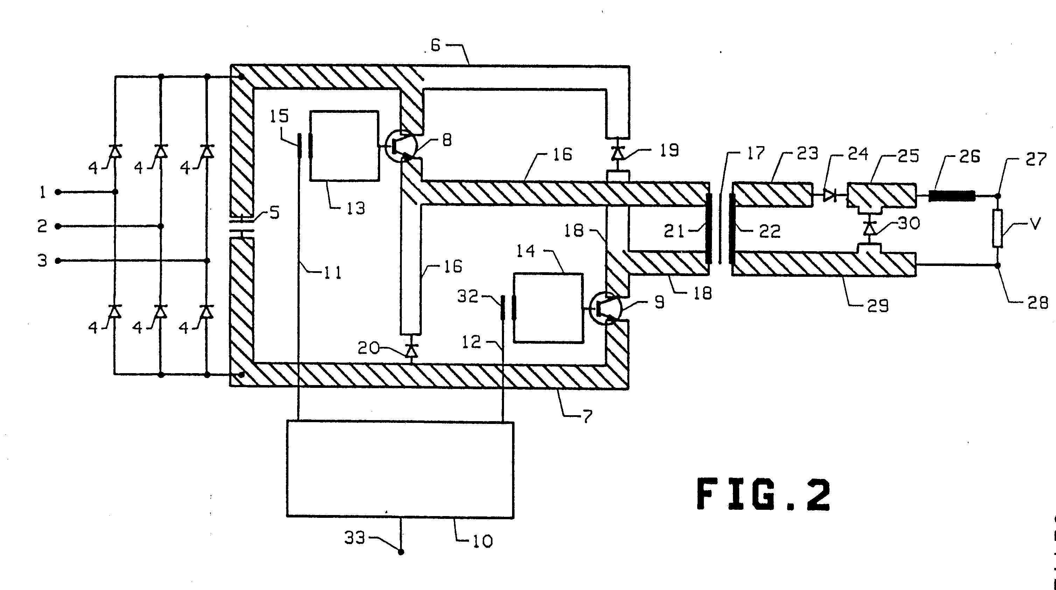

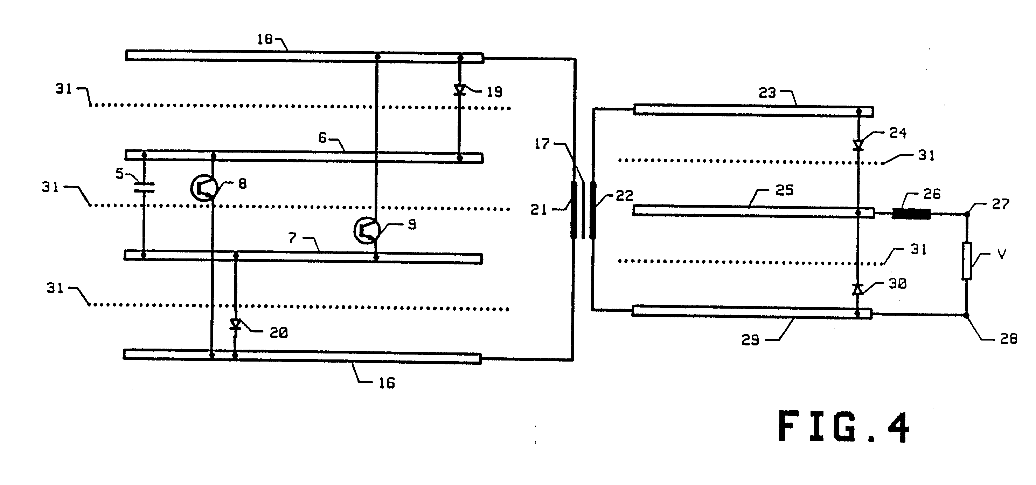

The switching mode power supply unit depicted in Figures 2 and 3 is identical in all details with that of Figure 1 with respect to the electrical connections. In Figures 2 and 3, in the area between mains rectifier 4 and output of the output rectifier 24/30, all the conductors carrying in general high-frequency power are shown as metal plates, wherein the metal plates, according to the respective arrangement of conductors, are drawn in conformity with Figure 1, which does not in fact conform exactly with the actual apparatus. This is depicted in Figure 4 and will be explained in detail further below. The components, such as diodes 19 and 20, may consist of interconnected individual elements without representing any assemblies. It is also possible to design individual conductors carrying high-frequency power as metal plate pairs, if they carry a particular high load.

Figure 2 represents the operating phase, in which the semi-conductor switches are conductive. The sections of wiring 6, 7, 16, 18, 23, 25, and 29 used herein as electrical conductors are shaded. The circuits described above in connection with the Figure 1 are then formed through these sections.

Figure 3 represents the operating phase, in which semi-conductor switches 8 and 9 are non-conductive. The circuits formed through them are also described in connections with Figure 1; they are depicted in Figure 3 by shading.

A comparison between Figures 2 and 3 shows that, in the operational case "semi-conductor switches 8 and 9 conductive" (Figure 2), those metal plate sections of metal plates 6, 7, 16 and 18 in the area before the transformer 17 which are shaded and include, semi-conductor switches 8 and 9, carry current. The areas of the metal plates 6, 16 and 18 containing the diodes 19 and 20 are shown free of shading. These latter areas are shaded in Figure 3 (operational case "semi-conductor switches 8 and 9 non-conductive") in addition to the other current-carrying areas of metal plates 6 and 7, whereas the areas around the semi-conductor switches 8 and 9 are free of shading, since in this case, as mentioned above, semi-conductor switches 8 and 9 are non-conductive.

There is continuous shading of the metal plates 23, 25 and 29, in the area behind transformer 17 in the operational phase "semi-conductor switches 8 and 9 conductive" (Figure 2) since in this case current is flowing from the secondary side 22 across rectifier 24, storage choke 26 and load V, whilst in the case where semi-conductor switches 8 and 9 are non-conductive (Figure 3), rectifier 24 is made use of in reverse direction, so that current flows only over metal plate 25 and a portion of metal plate 29 including inverse rectifier 30 and load V.

Figure 4 shows a practical design in accordance with Figures 2 and 3, having a correct spatial arrangement of metal plates 6, 7, 16, 18 on the primary side 21 and of metal plates 23, 25, 29 on the secondary side 22 of transformer 17. The metal plates extend respectively over a length of approximately 20 to 50 cm, and the depicted components are either soldered or screwed on to them. It should be pointed out that the conductor plates in Figure 4 are shown as seen from the side, so that their edges are facing the viewer. Further, Figure 4 shows the thin-film insulations 31 lying in between the conductor plates.

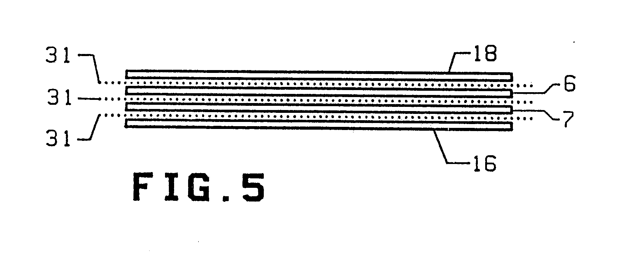

In Figure 5 is shown a stack comprising conductor plates 18, 6, 7 and 16 together with thin-film insulations 31 lying in between them. The stack has its component parts lying air-gap-free on top of one another, thus taking up a minimal area between them.

The conductor plates 23, 25 and 29 of Figure 4 are stacked in a similar manner.

## Claims

1. Switching mode power supply for supplying power to service equipment consuming heavy currents, in particular electrical welding equipment, in which the mains voltage is rectified by a mains rectifier, the direct voltage thus obtained is converted into a high-frequency square-wave voltage by means of semi-conductor switches controlled by high-frequency and the high-frequency square-wave voltage is transformed by a transformer and is rectified by an output rectifier, characterised in that the conductors of each electrical circuit carrying high-frequency power in the region between mains rectifier (4) and output of the output rectifiers (24,30) are formed as thin laminated metal plates (6,7,16,18,23,25,29) having thin-film, preferably foil, insulation (31) lying there-between.

2. Switching mode power supply according to claim 1 further characterised in that the metal plates (6,7,16,18) in the region between mains rectifier (4) and transformer (17) form a lamination.

3. Switching mode power supply according to claim 1 or 2 further characterised in that the metal plates (23,25,29) in the region between transformer (17) and output rectifier (24,30) form a lamination.

0241250

FIG. 1

FIG.2

0241250

FIG.3

FIG.4

**FIG.5**

31 — 18
31 — 6
31 — 7
31 — 16